# EUROPEAN PATENT SPECIFICATION

(11) **EP 3 277 740 B1**
(45) Date of publication and mention of the grant of the patent: **30.12.2020**
(21) Application number: 16718060.3
(22) Date of filing: 30.03.2016
(51) Int. Cl.: C08G 18/48, C08G 18/76, C08G 18/18, C08G 18/20, C08G 18/24, C08G 101/00

(54) **SEMI-FLEXIBLE FOAM FORMULATIONS**
HALBSTARRE SCHAUMFORMULIERUNGEN
FORMULATIONS DE MOUSSE SEMI-FLEXIBLE

(30) Priority: 31.03.2015 US 201562140703 P
(43) Date of publication of application: 07.02.2018
(73) Proprietor: Dow Global Technologies LLC, Midland, MI 48674 (US)
(72) Inventor: COOKSON, Paul, 8810 Horgen (CH); AMICI-KROUTILOVA, Irena, 8810 Horgen (CH); CASATI, Francois, 8808 Pfaeffikon (CH); AHMADLOO, Hamideh, 8810 Horgen (CH); LORA LAMIA, Alberto, 8810 Horgen (CH)
(74) Representative: Beck Greener LLP
(86) International application number: PCT/US2016/024941
(87) International publication number: WO 2016/160939

(56) References cited:
- WO-A1-2014/011375

## Description

### Field of Disclosure

Embodiments of the present disclosure are directed towards semi-flexible foam formulations, more specifically, embodiments are directed towards semi-flexible foam formulations including toluene diisocyanate.

### Background

Foams are dispersions in which a gas is dispersed in a liquid material, a solid material, or a gel material. Foams can be formed by a chemical reaction of polyols and isocyanate. Foams can be utilized for a number of various applications, including bedding, furniture, vehicle seating, and carpet backing, among others.

### Summary

The present disclosure provides semi-flexible foam formulations including a polyether polyol composition including a first polyether polyol having an average nominal hydroxyl functionality from 2 to 4 and a number average equivalent weight from 120 to 1500, wherein the first polyether polyol includes polymer chain having from 0 weight percent to 15 weight percent of constitutional units derived from ethylene oxide and 85 weight percent to 100 weight percent of constitutional units derived from propylene oxide, a second polyether polyol having a having an average nominal hydroxyl functionality from 4 to 8 and a number average equivalent weight from 120 to 800, wherein the second polyether polyol includes a polypropylene oxide polymer chain, and a third polyether polyol having an average nominal hydroxyl functionality from 2 to 4 a number average equivalent weight from 200 to 500, wherein the third polyether polyol includes a polymer chain having from 40 weight percent to 85 weight percent of constitutional units derived from ethylene oxide and 15 weight percent to 60 weight percent of constitutional units derived from propylene oxide, where the polyether polyol composition is from 20 weight percent to 50 weight percent of constitutional units derived from ethylene oxide, the polyether polyol composition has a total average nominal hydroxyl functionality from 3.05 to 4.1, and the polyether polyol composition has a total number average equivalent weight from 250 to 400 and toluene diisocyanate.

The present disclosure provides semi-flexible foams formed by curing the semi-flexible foam formulations.

The present disclosure provides methods of forming a semi-flexible foam.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Detailed Description

Semi-flexible foam formulations including a polyether polyol compositions and toluene diisocyanate, and semi-flexible foams formed therefrom are disclosed herein. The semi-flexible foam formulations can be cured to form semi-flexible foams, which may be referred to as polyurethanes. Polyurethanes are polymers including chains of units joined by carbamate links, which may be referred to as urethane links.

As mentioned the semi-flexible foam formulations disclosed herein may be utilized to form semi-flexible foams. These semi-flexible foams can have properties that are desirable for various applications. For example and in contrast to previous semi-flexible foams, the semi-flexible foams disclosed herein have a number of viscoelastic properties. For instance, the semi-flexible foams disclosed herein can have a density between 35 and 80 kg/m³, a resiliency from 2 percent to 20 percent, a 95 % recovery time of at least 3 seconds, and/or a compression load deflection at 40% of at least 1.3 kPa as measured according to ISO 3386. Surprisingly and in contrast to previous foam formulations, the semi-flexible foam formulations disclosed herein can be utilized to provide semi-flexible foams having the density, resiliency, recovery time, and compression load deflection mentioned, while simultaneously providing a number of other desirable properties.

The semi-flexible foam formulations disclosed herein include a polyether polyol composition. As used herein, "polyol" refers to an organic molecule, e.g., polyether, having an average of greater than 1.0 hydroxyl groups per molecule.

The polyether polyol compositions include a first polyether polyol. The first polyether polyol can include one or more polyols, e.g., the first polyether polyol may be a blend of polyols. The first polyether polyol can have an average nominal hydroxyl functionality from 2 to 4. As used herein, "average nominal hydroxyl functionality" refers to a number average functionality, e.g., a number of hydroxyl groups per molecule, of a polyol or a polyol composition based upon a number average functionality, e.g., a number of active hydrogen atoms per molecule, of initiator(s) used for preparation. As used herein, "average" refers to number average unless indicated otherwise.

The first polyether polyol can have a number average equivalent weight from 120 to 1500. All individual values and subranges from 120 to 1500 are included; for example, the first polyether polyol can have a number average equivalent weight from a lower limit of 120, 130, or 140 to an upper limit of 1500, 1450, or 1400. Some embodiments of the present disclosure provide that the first polyether polyol is nominally a triol.

Embodiments of the present disclosure provide that the first polyether polyol includes a polymer chain having from 0 weight percent to 15 weight percent of constitutional units derived from ethylene oxide and 85 weight percent to 100 weight percent of constitutional units derived from propylene oxide. All individual values and subranges from 0 weight percent to 15 weight percent of constitutional units derived from ethylene oxide are included; for example, the first polyether polyol can include a polymer having from a lower limit of 0 weight percent, 3 weight percent, or 5 weight percent to an upper limit of 15 weight percent, 12 weight percent, or 10 weight percent of constitutional units derived from ethylene oxide. Correspondently, all individual values and subranges from 85 weight percent to 100 weight percent of constitutional units derived from propylene oxide are included; for example, the first polyether polyol can include a polymer chain having from a lower limit of 85 weight percent, 87 weight percent, or 90 weight percent to an upper limit of 100 weight percent, 97 weight percent, or 95 weight percent of constitutional units derived from propylene oxide.

The polyether polyol compositions include a second polyether polyol. The second polyether polyol can include one or more polyols, e.g., the second polyether polyol may be a blend of polyols. The second polyether polyol can have an average nominal hydroxyl functionality from 4 to 8. Some embodiments of the present disclosure provide that the nominal functionality of the second polyether polyol is 4.7. The second polyether polyol can have a number average equivalent weight from 120 to 800. All individual values and subranges from 120 to 800 are included; for example, the second polyether polyol can have number average equivalent weight from a lower limit of 120, 135, or 150 to an upper limit of 800, 750, or 700. The second polyether polyol can include a polypropylene oxide polymer chain.

The polyether polyol compositions include a third polyether polyol. The third polyether polyol can include one or more polyols, e.g., the third polyether polyol may be a blend of polyols. The third polyether polyol can have an average nominal hydroxyl functionality from 2 to 4. The third polyether polyol can have number average equivalent weight from 200 to 500. All individual values and subranges from 200 to 500 are included; for example, the third polyether polyol can have a number average equivalent weight from a lower limit of 200, 220, or 250 to an upper limit of 500, 470, or 450. Some embodiments of the present disclosure provide that the third polyether polyol is nominally a triol.

Embodiments of the present disclosure provide that the third polyether polyol includes a polymer chain having from 30 weight percent to 85 weight percent of constitutional units derived from ethylene oxide and 15 weight percent to 70 weight percent of constitutional units derived from propylene oxide. All individual values and subranges from 30 weight percent to 85 weight percent of constitutional units derived from ethylene oxide are included; for example, the third polyether polyol can include a polymer chain having from a lower limit of 30 weight percent, 35 weight percent, or 40 weight percent to an upper limit of 85 weight percent, 83 weight percent, or 80 weight percent of constitutional units derived from ethylene oxide. Correspondently, all individual values and subranges from 15 weight percent to 70 weight percent of constitutional units derived from propylene oxide are included; for example, the third polyether polyol can include a polymer chain having from a lower limit of 15 weight percent, 17 weight percent, or 20 weight percent to an upper limit of 70 weight percent, 65 weight percent, or 60 weight percent of constitutional units derived from propylene oxide.

Some embodiments of the present disclosure provide that the polyether polyol composition is based on a blend of polyols having different functionalities. For example, as previously mentioned, the first polyether polyol and the third polyether polyol may nominally be triols, while the nominal functionality of the second polyether polyol may be 4.7.

Some embodiments of the present disclosure provide that one or more of the polyether polyols is a mixed feed ethylene oxide and propylene oxide based polyol. For instance, one or more of the polyether polyols may contain polymer chains of ethylene oxide and propylene oxide combined.

The first polyether polyol, the second polyether polyol, and the third polyether polyol can be prepared using known methods. For instance, the polyether polyols can be prepared via base-catalyzed oxyalkylation. For base-catalyzed oxyalkylation, a hydric low molecular weight starter molecule, such as propylene glycol, glycerine, or sorbitol can be reacted with one or more alkylene oxides; such as ethylene oxide or propylene oxide, to form a polyether polyol, e.g., first polyether polyol, the second polyether polyol, the third polyether polyol. Another manufacturing method can utilize DMC catalysis. Among the processes that may be utilized to prepare the first polyether polyol, the second polyether polyol, and the third polyether polyol, are those discussed in US 3,728,308 ; U.S. Patent 5,158,922; U.S. Patent 5,470,813; U.S. Patent 5,689,012; U.S. Patent 6,077,978; and U.S. Patent 7,919,575, among others. The first polyether polyol, the second polyether polyol, and the third polyether polyol, may be obtained commercially, such as under the trade names VORANOL™, TERCAROL™, VORALUX™, and SPECFLEX™,available from The Dow Chemical Company, among others.

Embodiments of the present disclosure provide that the polyether polyol compositions can have an average nominal hydroxyl functionality from 3.05 to 4.1. For instance, polyether polyols, which form a polyether polyol composition, can have a combined nominal hydroxyl functionality from 3.05 to 4.1.

Embodiments of the present disclosure provide that the polyether polyol compositions can have a total number average equivalent weight from 250 to 400. For instance, the polyether polyols, which form a polyether polyol composition, can have a combined number average equivalent weight from 250 to 400. All individual values and subranges from 250 to 400 are included; for example, the polyether polyol compositions can have a total number average equivalent weight from a lower limit of 250, 255, or 260 to an upper limit of 400, 380, or 360.

Embodiments of the present disclosure provide that the polyether polyol compositions can be from 20 weight percent to 50 weight percent of constitutional units derived from ethylene oxide. For instance, the polyether polyols, which form a polyether polyol composition, can have constitutional units derived from ethylene oxide that sum to from 20 weight percent to 50 weight percent of a total weight of the polyether polyol composition. All individual values and subranges from 20 weight percent to 50 weight percent of constitutional units derived from ethylene oxide are included; for example, the polyether polyol compositions can be from a lower limit of 20 weight percent, 23 weight percent, or 25 weight percent to an upper limit of 50 weight percent, 47 weight percent, or 45 weight percent of constitutional units derived from ethylene oxide. Embodiments of the present disclosure provide that the polyether polyol compositions can be from 50 weight percent to 80 weight percent of constitutional units derived from propylene oxide. All individual values and subranges from 50 weight percent to 80 weight percent of constitutional units derived from propylene oxide are included; for example, the polyether polyol compositions can be from a lower limit of 50 weight percent, 53 weight percent, or 55 weight percent to an upper limit of 80 weight percent, 77 weight percent, or 75 weight percent of constitutional units derived from propylene oxide.

The polyether polyol compositions are formed from polyols, e.g., the first polyether polyol, the second polyether polyol, and the third polyether polyol. For instance, the first polyether polyol, the second polyether polyol, and the third polyether polyol can be blended with one another. Blending can be done prior to foaming or can be carried out on line, for instance through a static mixer.

Embodiments of the present disclosure provide that the first polyether polyol can be from 10 parts to 60 parts per 100 parts of a combination of the first polyether polyol, the second polyether polyol, and the third polyether polyol. All individual values and subranges from 10 parts to 60 parts are included; for example, the first polyether polyol can be from a lower limit of 10 parts, 12 parts, or 15 parts to an upper limit of 60 parts, 57 parts, or 55 parts per 100 parts of the combination of the first, the second, and the third polyether polyols.

Embodiments of the present disclosure provide that the second polyether polyol can be from 3 parts to 40 parts per 100 parts of the combination of first, the second, and the third polyether polyols. All individual values and subranges from 3 parts to 40 parts are included; for example, the second polyether polyol can be from a lower limit of 3 parts, 5 parts, or 7 parts to an upper limit of 40 parts, 37 parts, or 35 parts per 100 parts of the combination of the first, the second, and the third polyether polyols.

Embodiments of the present disclosure provide that the third polyether polyol can be from 30 parts to 70 parts per 100 parts of the combination of first, the second, and the third polyether polyols. All individual values and subranges from 30 parts to 70 parts are included; for example, the third polyether polyol can be from a lower limit of 30 parts, 33 parts, or 35 parts to an upper limit of 70 parts, 67 parts, or 65 parts per 100 parts of the combination of the first, the second, and the third polyether polyols.

Some embodiments of the present disclosure provide that one or more of the polyether polyols of polyether polyol compositions can include a SAN or styrene and acrylonitrile polymer, or PHD or polyurea polymer, for instance. Such polymer polyols may be useful to open foam cells and/or to increase foam load bearing.

As mentioned, the polyether polyol compositions are included in the semi-flexible foam formulations disclosed herein, e.g. foam formulations that can be cured to semi-flexible foams having a number of viscoelastic properties. The semi-flexible foam formulations, as disclosed herein, include toluene diisocyanate. As used herein, toluene diisocyanate includes toluene diisocyanate isomers and combinations thereof. Some embodiments of the present disclosure provide that higher functionality MDI is not utilized .

The toluene diisocyanate can be prepared by phosgenation of corresponding polyamines with formation of polycarbamoyl chlorides and thermolysis thereof to provide a polyisocyanate and hydrogen chloride, or by a phosgene-free process, such as by reacting the corresponding polyamines with urea and alcohol to give polycarbamates, and thermolysis thereof to give a polyisocyanate and alcohol, for example. Toluene diisocyanate may be obtained commercially. Examples of commercially available toluene diisocyanate include, but are not limited to, isocyanates sold under the trade names VORANATE™, available from The Dow Chemical Company.

The toluene diisocyanate can be utilized such that the semi-flexible foam formulation has an isocyanate index in a range from 70 to 115. Isocyanate index can be defined as a quotient, multiplied by one hundred, of an actual amount of isocyanate utilized and a theoretical amount of isocyanate for curing. All individual values and subranges from 70 to 115 are included; for example, the semi-flexible foam formulation can have an isocyanate index from a lower limit of 70, 75, or 80 to an upper limit of 115, 105, or 100.

The semi-flexible foam formulations can include a blowing agent. The blowing agent can be a physical blowing agent, a chemical blowing agent, or combinations thereof.

Physical blowing agents can be utilized to help foam the semi-flexible foam formulations. Examples of physical blowing agents include liquid carbon dioxide; alkanes; cycloalkanes, such as, cyclopentane, cyclohexane, cyclobutane and mixtures thereof; other cycloalkanes having a maximum of 4 carbon atoms; dialkyl ethers, cycloalkylene ethers, fluoroalkanes, and mixtures thereof. Examples of alkanes include propane, n-butane, isobutane, isopentane and mixtures thereof. Examples of dialkyl ethers include dimethyl ether, methyl ethyl ether, methyl butyl ether, diethyl ether, and combinations thereof. An example of a cycloalkylene ether is furan. Examples of fluoroalkanes include trifluoromethane, difluoromethane, difluoroethane, tetrafluoroethane, hepta-fluoropropane, and combinations thereof.

Some embodiments of the present disclosure provide that the physical blowing agent, when utilized, can be from 0.5 parts to 15.0 parts per 100 parts of a combination of the first polyether polyol, the second polyether polyol, and the third polyether polyol. All individual values and subranges from 0.5 parts to 10.0 parts are included; for example, the physical blowing agent can be from a lower limit of 0.5, 1.0, or 2.0 parts to an upper limit of 15.0, 13.0, or 10.0 parts of a combination of the first polyether polyol, the second polyether polyol, and the third polyether polyol.

Chemical blowing agents can be utilized to form carbon dioxide from a reaction with the polyisocyanate, for instance. An example the chemical blowing agent is water. Some embodiments of the present disclosure provide that the chemical blowing agent, when utilized, is from 0.5 parts to 5.0 parts per 100 parts of a combination of the first polyether polyol, the second polyether polyol, and the third polyether polyol. All individual values and subranges from 0.5 parts to 5.0 parts are included; for example, the chemical blowing agent can be from a lower limit of 0.5, 0.6, or 0.7 parts to an upper limit of 5.0, 4.8, or 4.6 parts per 100 parts of a combination of the first polyether polyol, the second polyether polyol, and the third polyether polyol. Some embodiments of the present disclosure provide that carbon dioxide may also be utilized via adducts of carbon dioxide, such as carbamates, which may be added to the viscoelastic foam formulations.

The semi-flexible foam formulations can include a surfactant. The surfactant may help to emulsify components of the viscoelastic foam formulation, regulate cell size of a resultant foam, and/or stabilize a cell structure to help prevent collapse and/or sub-surface voids. Examples of surfactants include silicon-based compounds such as silicone oils and organosilicone-polyether copolymers, such as polydimethyl siloxane and polydimethylsiloxane-polyoxyalkylene block copolymers, e.g., polyether modified polydimethyl siloxane, and combinations thereof. Examples of surfactants include silica particles and silica aerogel powders, as well as organic surfactants such as nonylphenol ethoxylates. Surfactants are available commercially and include those available under trade names such as NIAX™, DABCO™, and TEGOSTAB™, among others. Some embodiments of the present disclosure provide that surfactant, when utilized, is from 0.1 parts to 1.5 parts per 100 parts of a combination of the first polyether polyol, the second polyether polyol, and the third polyether polyol. All individual values and subranges from 0.1 parts to 1.5 parts are included; for example, the surfactant can be from a lower limit of 0.1, 0.2, or 0.3 parts to an upper limit of 1.5, 1.3, or 1.0 per 100 parts of a combination of the first polyether polyol, the second polyether polyol, and the third polyether polyol.

The semi-flexible foam formulations can include a catalyst. The catalyst can be an amine catalyst, a metallic catalyst, and combinations thereof. Examples of amine catalysts include pentamethyldiethylene-triamine, triethylamine, tributyl amine, dimethylethanolamine, N,N,N',N'-tetra-methylethylenediamine, dimethylbenzylamine, N,N,N',N'-tetramethylbutanediamine, dimethylcyclohexylamine, triethylenediamine, and combinations thereof, among others. Examples of metallic catalysts include tin(II) salts of organic carboxylic acids, e.g., tin(II) diacetate, tin(II) dioctanoate, tin(II) diethylhexanoate, Stannous Octoate and tin(II) dilaurate, and dialkyltin(IV) salts of organic carboxylic acids, e.g., dibutyltin diacetate, dibutyltin dilaurate, dibutyltin maleate and dioctyltin diacetate, and combinations thereof, among others. Catalysts are available commercially and include those available under trade names such as NIAX™, POLYCAT™, and DABCO™, among others. Some embodiments of the present disclosure provide that the catalyst can be a combination of at least one amine and a metal salt. Some embodiments of the present disclosure provide that reactive amine catalysts, such as DMEA or Dimethylethanolamine, and DMAPA or N,N-dimethylaminopropylamine and preferably an amine initiated polyol, such as Dow s VORACTIV™ or SPECFLEX ACTIV™ polyol, can be used to reduce or eliminate amine based VOC s or Volatile Organic Compounds, for example.

Some embodiments of the present disclosure provide that catalyst is from 0.04 parts to 5.00 parts per 100 parts of a combination of the first polyether polyol, the second polyether polyol, and the third polyether polyol. All individual values and subranges from 0.04 parts to 5.00 parts are included; for example, the catalyst can be from a lower limit of 0.04, 0.07, or 0.09 parts to an upper limit of 5.00, 3.50, or 2.00 parts per 100 parts of a combination of the first polyether polyol, the second polyether polyol, and the third polyether polyol.

Some embodiments of the present disclosure provide that the semi-flexible foam formulations can include one or more additional components. Different additional components and/or different amounts of the additional components may be utilized for various applications. Examples of additional components include liquid and/or solid pigments, colorants, flame retardants, crosslinkers, fillers, chain extenders, antioxidants, surface modifiers, bioretardant agents, mold release agents, and combinations thereof, among others. For a number of embodiments, no crosslinkers or chain extenders are utilized.

Semi-flexible foams disclosed herein can be prepared by curing, e.g. reacting, the semi-flexible foam formulations previously discussed. In contrast to previous semi-flexible foams, which have a high density and are usually made with a high functionality crosslinker, as discussed for instance in US 20130209778, or have closed cells, as described in WO 01/018087, for instance. Another option is to use a high primary OH polyol obtained by EO capping, as claimed in EP 932,633. Additionally as mentioned and in contrast to previous semi-flexible foams, the semi-flexible foams disclosed herein have a number of viscoelastic properties.

The semi-flexible foams disclosed herein can be prepared using known methods. These methods may include continuous or discontinuous free-rise slabstock foam processes and molded foam processes using a mixing head or a stirrer to blend components together with or without addition of air, for example. Output of the mixing head can be deposited onto a conveyor or to a mold. For slabstock process, the semi-flexible foam can expand further and rises as it moves down the conveyor, forming a continuous viscoelastic foam slab that can be cut into blocks or buns of a desired length for further curing and/or storage and subsequent slicing. In a discontinuous process, the semi-flexible foam formulation can be mixed through a head and poured into a container. A variable pressure foaming (VPF) process, as described in US 5,194,453, can be utilized.

A molded foam process can employs a one-shot approach in which a specific amount of the isocyanate is combined and mixed with a specific amount of the remaining semi-flexible foam formulation components to form a mixture. The mixture can deposited as a froth into a mold that is then closed. The foam can expand to fill the mold, which is subsequently opened for demolding after a curing time. The curing time can be between 1 and 20 minutes, for example.

The semi-flexible foam can have an irregular cell size structure with open cells, e.g., with broken windows. Preferably the linear cell count is below 40 cells per centimeter. Very fine cells may provide a tight foam and may utilize a silicone surfactant adjustment, either using a different type or and changing concentration, for instance.

As mentioned, for some applications it is desirable for a semi-flexible foam to have a compression load deflection at 40% of at least 1. 3 kilopascals as measured according to ISO 3386.

The semi-flexible foams disclosed herein can have a compression load deflection at 40% as measured according to ISO 3386, of at least 1.4 kPa.

The semi-flexible foams disclosed herein can have a density, measured according to ISO 845-88, from 35 kg/ m³ to 80 kg/m³. All individual values and subranges from 35 kg/ m³ to 80 kg/ m³ are included; for example, the semi-rigidfoams can have a density from a lower limit of 35 kg/ m³, 37 kg/ m³, or 40 kg/ m³ to an upper limit of 80 kg/ m³, 75 kg/ m³, or 70kg/ m³. Advantageously the semi-flexible foams disclosed herein may be utilized for low density applications. For example, for a number of applications, it is desirable for the density to be less than 90 kg/ m³.

The semi-flexible foams disclosed herein can have an uncrushed airflow, measured according to ASTM D 3574, from 0.01 ft³/min to 10.00 ft³/min. All individual values and subranges from 0.01 ft³/min to 10.00 ft³/min are included; for example, the semi-flexible foams can have an uncrushed airflow from a lower limit of 0.01 ft³/min, 0.02 ft³/min, or 0.03 ft³/min to an upper limit of 10.00 ft³/min, 9.00 ft³/min, or 8.00 ft³/min. As previously mentioned, the semi-flexible foams can include open cells, hence, for various applications, uncrushed airflow values above 0.05 ft³/min are preferred.

The semi-flexible foams disclosed herein can have a resiliency, measured according to ASTM D 3574, from 2 percent to 20 percent. All individual values and subranges from 2 percent to 20 percent are included; for example, the semi-flexible foams can have a resiliency from a lower limit of 2 percent, or 3 percent to an upper limit of 20 percent, 18 percent, or 16 percent.

The semi-flexible foams disclosed herein can have a 95 % foam recovery time, measured according to ASTM 3574/08 test M of at least 3 seconds. For example, semi-flexible foams disclosed herein can have a 95 % foam recovery time, measured according to ASTM 3574/08 test M from 3 seconds to 200 seconds.

The semi-flexible foams disclosed herein can have a 90 % dry compression, measured according to ISO 1856, below 5 percent and a 70 % wet compression set, measured according to ISO 13362, below 5.0 percent. All individual values and subranges from 0.0 percent to 5.0 percent are included; for example, the semi-rigid foams can have a compression set from a lower limit of 0.0 percent, 0. 1 percent, or 0.2 percent to an upper limit of 5.0 percent, 4.8 percent, or 4.5 percent.

A low value of compression set, e.g. a value below 5 percent, indicates that the semi-flexible foam recovers at least 95 % of its initial thickness within a particular time limit. This indicates that the semi-rigid foam has a proper durability for use in bedding and furniture, although the recovery time is delayed

The semi-flexible foams disclosed herein can have at least one glass transition temperature from 0 °C to 90 °C. All individual values and subranges from 0 °C to 90 °C are included.

### EXAMPLES

In the Examples, various terms and designations for materials are used including, for instance, the following:
Polyether polyol #1 (polyol with nominal hydroxyl functionality of 3 and a number average equivalent weight of 1180, 7 % EO, available from The Dow Chemical Company); polyether polyol #2 (polyol with nominal hydroxyl functionality of 4.7 and a number average equivalent weight of 156, 0 % EO, available from The Dow Chemical Company); polyether polyol #3 (polyol with nominal hydroxyl functionality of 3 and a number average equivalent weight of 336, 60 % EO mixed feed with PO, available from The Dow Chemical Company); NIAX™ A1 (amine catalyst, available from Momentive Performance Materials Inc.); DABCO® 33LV (amine catalyst, available from Air Products & Chemicals Inc.); DABCO® T-9 (metallic catalyst, available from Air Products & Chemicals Inc.); NIAX™ L-620 (surfactant, available from Momentive Performance Materials Inc.); toluene diisocyanate 80-20 (80% 2,4-toluene diisocyanate and 20% 2,6-toluene diisocyanate, available from The Chemical Company).
Example 1, a semi-flexible foam formulation, was prepared at approximately 22 °C. To prepare Example 1, based upon 270 grams of total polyether polyol, all components except the toluene diisocyanate were added to a container and stirred for 30 seconds, after which the toluene diisocyanate was added to the contents of the container, which were stirred for an additional 30 seconds with a bench scale static mixer at approximately 1,800 RPM. Relative amounts of the components of Example 1 are shown in Table 1. Examples 2-3 were prepared as Example 1, with any changes indicated in Table 1.

**Table 1**

| | Example 1 | Example 2 | Example 3 |
|---|---|---|---|
| Polyether polyol #1 (parts) | 25 | 25 | 25 |
| Polyether polyol #2 (parts) | 20 | 20 | 20 |
| Polyether polyol #3 (parts) | 55 | 55 | 55 |
| Water (parts) | 2 | 2 | 2 |
| NIAX™ Alcatalyst (parts) | 0.15 | 0.15 | 0.15 |
| DABCO® 33LVcatalyst (parts) | 0.05 | 0.05 | 0.05 |
| NIAX™ L-620 surfactant (parts) | 0.8 | 0.8 | 0.8 |
| DABCO® T-9catalyst (parts) | 0.06 | 0.05 | 0.04 |
| Toluene diisocyanate (isocyanate index) | 82 | 86 | 90 |

Example 4, a semi-flexible foam, was formed by curing Example 1. To form Example 4, Example 1 was poured into an open top container and allowed to rise and cure for approximately 5 minutes at approximately 22 °C, thereafter annealed in an oven for approximately 5 minutes at 150 °C, and then removed from the oven and left uncovered for approximately 24 hours at approximately 22 °C in a ventilated area. Examples 5-6 were formed as Example 4, with the change that Examples 2-3 respectively replaced Example 1.

Various foam properties were determined for Examples 4-6. The properties were determined at 22 °C and 50 percent relative humidity.

Density was measured according to ISO 845-88; uncrushed airflow was measured according to ASTM D 3574, uncrushed means that foam samples were not compressed before airflow testing to leave the cell windows intact, as they were after foaming and curing;; resiliency was measured according to ASTM D 3574; 90% dry compression set was measured according to ISO 1856-00; and wet compression set was measured according to ISO 13362. Results are reported in Table 2.

**Table 2**

| Semi-rigid foam | Density (kg/m³) | Uncrushed airflow (ft³/min) | Resiliency (%) | 90% dry compression set (%) | Wet compression set (%) |
|---|---|---|---|---|---|
| Example 4 | 44.2 | 3.7 | 3 | 0.5 | 0.0 |
| Example 5 | 44.4 | 2.4 | 4 | 0.1 | 0.0 |
| Example 6 | 44.6 | 2.1 | 6 | 0.2 | 0.0 |

The data of Table 2 indicates desirable foam properties for each of Examples 4-6, since the loss of thickness of the foam samples after accelerated aging is very low for each of these semi-flexible foams. Surprisingly, the desirable resistance to both dry and humid aging is obtained while resiliency is low. Additionally, as indicated by the data of Table 2, foam airflows are not negatively impacted by the use of a high polyol functionality. Such polyol combinations, with overall functionality above 3.0, may be expected to close foam cells though a fast viscosity buildup of the reactants during foaming.

Foam compression load deflection at 40% was measured according to ISO 3386. Foam recovery times were determined according to ASTM 3574/08 test M. A test sample with the dimensions 100 x 100 x 50 mm was placed in a perforated supporting plate, a circular indentation foot was brought into contact with a preload of 1 N to determine the specimen s initial thickness. The specimen was then compressed to 75 % of its initial thickness. After a 60 seconds dwell time, the indentor returned to 5 % deflection. Recovery time measurement begins as soon as the return movement of the indentor starts. Time recording stops as foam recovers to apply a 3 N load on the indentor foot. Foam compression load deflection at 40% and foam recovery times are reported in Table 3. Long recovery times are obtained with high airflow values indicating there is no pneumatic effect, hence these foams are truly viscoelastic. Foam compression sets are very low, confirming the good durability properties of foams formed from the semi-flexible foam formulations disclosed herein.

**Table 3**

| Semi-flexible foam | Compression load deflection at 40% as measured according to ISO 3386 (kPa) | 95 % foam recovery time measured according to ASTM 3574/08 test M: (s) |
|---|---|---|
| Example 4 | 1.4 | 3 |
| Example 5 | 1.8 | 5 |
| Example 6 | 3.0 | 13 |

The data of Table 3 indicates that long recovery times are obtained with high airflow values indicating there is no pneumatic effect, hence these foams are truly viscoelastic. Foam compression sets are very low, confirming the good durability properties of foams formed from the semi-flexible foam formulations disclosed herein.

Glass transition temperatures were determined by dynamic mechanical thermal analysis (DMTA) utilizing Mettler Toledo DMA 861 equipment. Results are reported in Table 4.

**Table 4**

| Semi-flexible foam | Glass transition temperature (°C) |
|---|---|
| Example 4 | 28 |
| Example 6 | 35 |

The data in Table 4 show that each of the Examples tested has a glass transition temperature above the freezing point of water, which may be desirable for a number of applications.

## Claims

1. A semi-flexible foam formulation comprising:
polyether polyol composition comprising:
a first polyether polyol having an average nominal hydroxyl functionality from 2 to 4 and a number average equivalent weight from 120 to 1500, wherein the first polyether polyol includes a polymer chain having from 0 weight percent to 15 weight percent of constitutional units derived from ethylene oxide and 85 weight percent to 100 weight percent of constitutional units derived from propylene oxide;
a second polyether polyol having an average nominal hydroxyl functionality from 4 to 8 and a number average equivalent weight from 120 to 800, wherein the second polyether polyol includes a polypropylene oxide polymer chain; and
a third polyether polyol having an average nominal hydroxyl functionality from 2 to 4 and a number average equivalent weight from 200 to 500, wherein the third polyether polyol includes a polymer chain having from 30 weight percent to 85 weight percent of constitutional units derived from ethylene oxide and 15 weight percent to 60 weight percent of constitutional units derived from propylene oxide;
wherein the polyether polyol composition is from 20 weight percent to 50 weight percent of constitutional units derived from ethylene oxide, the polyether polyol composition has a total average nominal hydroxyl functionality from 3.05 to 4.1, and the polyether polyol composition has a total number average equivalent weight from 250 to 400; and
toluene diisocyanate.

2. The semi-flexible foam formulation of claim 1, wherein the first polyether polyol is from 10 parts to 60 parts per 100 parts of a combination of the first polyether polyol, the second polyether polyol, and the third polyether polyol; the second polyether polyol is from 3 parts to 40 parts per 100 parts of the combination of the first polyether polyol, the second polyether polyol, and the third polyether polyol; and the third polyether polyol is from 30 parts to 70 parts per 100 parts of the combination of the first polyether polyol, the second polyether polyol, and the third polyether polyol.

3. The semi-flexible foam formulation of any one of the preceding claims, wherein the first polyether polyol, and the third polyether polyol have a nominal functionality of 3 and the second polyether polyol has a nominal functionality of 4.7.

4. A semi-flexible foam formulation of any one of the preceding claims, wherein the semi-flexible foam formulation has an isocyanate index in a range from 70 to 115.

5. The semi-flexible foam formulation of any one of the preceding claims, further including a blowing agent that is from 0.5 parts to 5 parts per 100 parts of a combination of the first polyether polyol, the second polyether polyol, and the third polyether polyol.

6. The semi-flexible foam formulation of any one of the preceding claims, further including a surfactant that is from 0.1 parts to 1.5 parts per 100 parts of a combination of the first polyether polyol, the second polyether polyol, and the third polyether polyol.

7. The semi-flexible foam formulation of any one of the preceding claims, further including a catalyst selected from the group consisting of amine catalysts, metallic catalysts, and combinations thereof, wherein the catalyst is from 0.04 parts to 5.00 parts per 100 parts of a combination of the first polyether polyol, the second polyether polyol, and the third polyether polyol.

8. A semi-flexible foam formed by curing the semi-flexible foam formulation of any one of claims 1-7.

9. The semi flexible foam of claim 8, wherein the semi-flexible foam has a compression load deflection at 40% of at least 1.3 kilopascals as measured according to ISO 3386.

10. The semi-flexible foam of any one of claims 8-9, wherein the semi flexible foam has a 95 % recovery time of at least 3 seconds as measured according to ASTM 3574/08 test M.

11. The semi-flexible foam of any one of claims 8-10, wherein the semi-flexible foam has a density from 35 kg/ m³ to 80 kg/ m³.

12. The semi-flexible foam of any one of claims 8-11, wherein the semi flexible foam has a resiliency of less than 20 % as measured according to ASTM D3574.

13. A method for forming a semi-flexible foam comprising:
combining a polyether polyol composition comprising:
a first polyether polyol having an average nominal hydroxyl functionality from 2 to 4 and a number average equivalent weight from 120 to 1500, wherein the first polyether polyol includes a polymer chain having from 0 weight percent to 15 weight percent of constitutional units derived from ethylene oxide and 85 weight percent to 100 weight percent of constitutional units derived from propylene oxide;
a second polyether polyol having an average nominal hydroxyl functionality from 4 to 8 and a number average equivalent weight from 120 to 800, wherein the second polyether polyol includes a polypropylene oxide polymer chain; and
a third polyether polyol having an average nominal hydroxyl functionality from 2 to 4 and a number average equivalent weight from 200 to 500, wherein the third polyether polyol includes a polymer chain having from 30 weight percent to 85 weight percent of constitutional units derived from ethylene oxide and 15 weight percent to 60 weight percent of constitutional units derived from propylene oxide;
wherein the polyether polyol composition is from 20 weight percent to 50 weight percent of constitutional units derived from ethylene oxide, the polyether polyol composition has a total average nominal hydroxyl functionality from 3.05 to 4.1, and the polyether polyol composition has a total number average equivalent weight from 250 to 400; and
toluene diisocyanate to form a semi-flexible foam formulation having an isocyanate index in a range from 70 to 115; and
curing the semi-flexible foam formulation to form the semi-flexible foam.

14. The method of claim 13, further comprising;
adding water to the semi-flexible foam formulation, wherein the water is from 0.5 parts to 3.5 parts per 100 parts of a combination of the first polyether polyol, the second polyether polyol, and the third polyether polyol; and
adding a catalyst and a surfactant to the semi-flexible foam formulation, wherein the catalyst is from 0.05 parts to 5 parts per 100 parts of the combination of the first polyether polyol, the second polyether polyol, and the third polyether polyol and the surfactant is from 0.1 parts to 1.5 parts per 100 parts of the combination of the first polyether polyol, the second polyether polyol, and the third polyether polyol.

## Patentansprüche

1. Eine Formulierung für halbharten Schaum, die Folgendes beinhaltet:
eine Polyetherpolyolzusammensetzung, beinhaltend:
ein erstes Polyetherpolyol mit einer mittleren nominellen Hydroxylfunktionalität von 2 bis 4 und einem zahlenmittleren Äquivalentgewicht von 120 bis 1500,
wobei das erste Polyetherpolyol eine Polymerkette umfasst, die zu 0 Gewichtsprozent bis 15 Gewichtsprozent von Ethylenoxid abgeleitete konstitutionelle Einheiten und zu 85 Gewichtsprozent bis 100 Gewichtsprozent von Propylenoxid abgeleitete konstitutionelle Einheiten aufweist;
ein zweites Polyetherpolyol mit einer mittleren nominellen Hydroxylfunktionalität von 4 bis 8 und einem zahlenmittleren Äquivalentgewicht von 120 bis 800, wobei das zweite Polyetherpolyol eine Polypropylenoxidpolymerkette umfasst; und
ein drittes Polyetherpolyol mit einer mittleren nominellen Hydroxylfunktionalität von 2 bis 4 und einem zahlenmittleren Äquivalentgewicht von 200 bis 500, wobei das dritte Polyetherpolyol eine Polymerkette umfasst, die zu 30 Gewichtsprozent bis 85 Gewichtsprozent von Ethylenoxid abgeleitete konstitutionelle Einheiten und zu 15 Gewichtsprozent bis 60 Gewichtsprozent von Propylenoxid abgeleitete konstitutionelle Einheiten aufweist;
wobei die Polyetherpolyolzusammensetzung zu 20 Gewichtsprozent bis 50 Gewichtsprozent aus von Ethylenoxid abgeleiteten konstitutionellen Einheiten besteht, die Polyetherpolyolzusammensetzung eine gesamte mittlere nominelle Hydroxylfunktionalität von 3,05 bis 4,1 aufweist und die Polyetherpolyolzusammensetzung ein gesamtes zahlenmittleres Äquivalentgewicht von 250 bis 400 aufweist; und
Toluendiisocyanat.

2. Formulierung für halbharten Schaum gemäß Anspruch 1, wobei das erste Polyetherpolyol von 10 Teilen bis 60 Teile pro 100 Teile einer Kombination des ersten Polyetherpolyols, des zweiten Polyetherpolyols und des dritten Polyetherpolyols ausmacht, das zweite Polyetherpolyol von 3 Teilen bis 40 Teile pro 100 Teile der Kombination des ersten Polyetherpolyols, des zweiten Polyetherpolyols und des dritten Polyetherpolyols ausmacht und das dritte Polyetherpolyol von 30 Teilen bis 70 Teile pro 100 Teile der Kombination des ersten Polyetherpolyols, des zweiten Polyetherpolyols und des dritten Polyetherpolyols ausmacht.

3. Formulierung für halbharten Schaum gemäß einem der vorhergehenden Ansprüche, wobei das erste Polyetherpolyol und das dritte Polyetherpolyol eine nominelle Funktionalität von 3 aufweisen und das zweite Polyetherpolyol eine nominelle Funktionalität von 4,7 aufweist.

4. Formulierung für halbharten Schaum gemäß einem der vorhergehenden Ansprüche, wobei die Formulierung für halbharten Schaum einen Isocyanatindex in einem Bereich von 70 bis 115 aufweist.

5. Formulierung für halbharten Schaum gemäß einem der vorhergehenden Ansprüche, ferner umfassend ein Treibmittel, das von 0,5 Teilen bis 5 Teile pro 100 Teile einer Kombination des ersten Polyetherpolyols, des zweiten Polyetherpolyols und des dritten Polyetherpolyols ausmacht.

6. Formulierung für halbharten Schaum gemäß einem der vorhergehenden Ansprüche, ferner umfassend ein Tensid, das von 0,1 Teilen bis 1,5 Teile pro 100 Teile einer Kombination des ersten Polyetherpolyols, des zweiten Polyetherpolyols und des dritten Polyetherpolyols ausmacht.

7. Formulierung für halbharten Schaum gemäß einem der vorhergehenden Ansprüche, ferner umfassend einen Katalysator, der aus der Gruppe ausgewählt ist, die aus Aminkatalysatoren, metallischen Katalysatoren und Kombinationen davon besteht, wobei der Katalysator von 0,04 Teilen bis 5,00 Teile pro 100 Teile einer Kombination des ersten Polyetherpolyols, des zweiten Polyetherpolyols und des dritten Polyetherpolyols ausmacht.

8. Ein halbharter Schaum, gebildet durch Aushärten der Formulierung für halbharten Schaum gemäß einem der Ansprüche 1-7.

9. Halbharter Schaum gemäß Anspruch 8, wobei der halbharte Schaum eine Stauchhärte bei 40 % von mindestens 1,3 Kilopascal, wie gemessen gemäß ISO 3386, aufweist.

10. Halbharter Schaum gemäß einem der Ansprüche 8-9, wobei der halbharte Schaum eine 95-%-Rückstellzeit von mindestens 3 Sekunden, wie gemessen gemäß ASTM 3574/08 Prüfung M, aufweist.

11. Halbharter Schaum gemäß einem der Ansprüche 8-10, wobei der halbharte Schaum eine Dichte von 35 kg/m³ bis 80 kg/m³ aufweist.

12. Halbharter Schaum gemäß einem der Ansprüche 8-11, wobei der halbharte Schaum eine Rückstellelastizität von weniger als 20 %, wie gemessen gemäß ASTM D3574, aufweist.

13. Ein Verfahren zum Bilden eines halbharten Schaums, das Folgendes beinhaltet:
Kombinieren einer Polyetherpolyolzusammensetzung, beinhaltend:
ein erstes Polyetherpolyol mit einer mittleren nominellen Hydroxylfunktionalität von 2 bis 4 und einem zahlenmittleren Äquivalentgewicht von 120 bis 1500,
wobei das erste Polyetherpolyol eine Polymerkette umfasst, die zu 0 Gewichtsprozent bis 15 Gewichtsprozent von Ethylenoxid abgeleitete konstitutionelle Einheiten und zu 85 Gewichtsprozent bis 100 Gewichtsprozent von Propylenoxid abgeleitete konstitutionelle Einheiten aufweist;
ein zweites Polyetherpolyol mit einer mittleren nominellen Hydroxylfunktionalität von 4 bis 8 und einem zahlenmittleren Äquivalentgewicht von 120 bis 800, wobei das zweite Polyetherpolyol eine Polypropylenoxidpolymerkette umfasst; und
ein drittes Polyetherpolyol mit einer mittleren nominellen Hydroxylfunktionalität von 2 bis 4 und einem zahlenmittleren Äquivalentgewicht von 200 bis 500, wobei das dritte Polyetherpolyol eine Polymerkette umfasst, die zu 30 Gewichtsprozent bis 85 Gewichtsprozent von Ethylenoxid abgeleitete konstitutionelle Einheiten und zu 15 Gewichtsprozent bis 60 Gewichtsprozent von Propylenoxid abgeleitete konstitutionelle Einheiten aufweist;
wobei die Polyetherpolyolzusammensetzung zu 20 Gewichtsprozent bis 50 Gewichtsprozent aus von Ethylenoxid abgeleiteten konstitutionellen Einheiten besteht, die Polyetherpolyolzusammensetzung eine gesamte mittlere nominelle Hydroxylfunktionalität von 3,05 bis 4,1 aufweist und die Polyetherpolyolzusammensetzung ein gesamtes zahlenmittleres Äquivalentgewicht von 250 bis 400 aufweist; und
Toluendiisocyanat, um eine Formulierung für halbharten Schaum zu bilden, die einen Isocyanatindex in einem Bereich von 70 bis 115 aufweist; und
Aushärten der Formulierung für halbharten Schaum, um den halbharten Schaum zu bilden.

14. Verfahren gemäß Anspruch 13, ferner beinhaltend:
Hinzufügen von Wasser zu der Formulierung für halbharten Schaum, wobei das Wasser von 0,5 Teilen bis 3,5 Teile pro 100 Teile einer Kombination des ersten Polyetherpolyols, des zweiten Polyetherpolyols und des dritten Polyetherpolyols ausmacht; und
Hinzufügen eines Katalysators und eines Tensids zu der Formulierung für halbharten Schaum, wobei der Katalysator von 0,05 Teilen bis 5 Teile pro 100 Teile der Kombination des ersten Polyetherpolyols, des zweiten Polyetherpolyols und des dritten Polyetherpolyols ausmacht und das Tensid von 0,1 Teilen bis 1,5 Teile pro 100 Teile der Kombination des ersten Polyetherpolyols, des zweiten Polyetherpolyols und des dritten Polyetherpolyols ausmacht.

## Revendications

1. Une formulation de mousse semi-souple comprenant :
une composition de polyol de polyéther comprenant :
un premier polyol de polyéther ayant une fonctionnalité hydroxyle nominale moyenne allant de 2 à 4 et un poids équivalent moyen en nombre allant de 120 à 1 500, le premier polyol de polyéther incluant une chaîne polymère ayant de 0 pour cent en poids à 15 pour cent en poids d'unités constitutives dérivées d'oxyde d'éthylène et 85 pour cent en poids à 100 pour cent en poids d'unités constitutives dérivées d'oxyde de propylène ;
un deuxième polyol de polyéther ayant une fonctionnalité hydroxyle nominale moyenne allant de 4 à 8 et un poids équivalent moyen en nombre allant de 120 à 800, le deuxième polyol de polyéther incluant une chaîne polymère d'oxyde de polypropylène ; et
un troisième polyol de polyéther ayant une fonctionnalité hydroxyle nominale moyenne allant de 2 à 4 et un poids équivalent moyen en nombre allant de 200 à 500, le troisième polyol de polyéther incluant une chaîne polymère ayant de 30 pour cent en poids à 85 pour cent en poids d'unités constitutives dérivées d'oxyde d'éthylène et 15 pour cent en poids à 60 pour cent en poids d'unités constitutives dérivées d'oxyde de propylène ;
dans laquelle la composition de polyol de polyéther représente de 20 pour cent en poids à 50 pour cent en poids d'unités constitutives dérivées d'oxyde d'éthylène, la composition de polyol de polyéther a une fonctionnalité hydroxyle nominale moyenne totale allant de 3,05 à 4,1, et la composition de polyol de polyéther a un poids équivalent moyen en nombre total allant de 250 à 400 ; et
du diisocyanate de toluène.

2. La formulation de mousse semi-souple de la revendication 1, dans laquelle le premier polyol de polyéther représente de 10 parties à 60 parties pour 100 parties d'une combinaison du premier polyol de polyéther, du deuxième polyol de polyéther, et du troisième polyol de polyéther ; le deuxième polyol de polyéther représente de 3 parties à 40 parties pour 100 parties de la combinaison du premier polyol de polyéther, du deuxième polyol de polyéther, et du troisième polyol de polyéther ; et le troisième polyol de polyéther représente de 30 parties à 70 parties pour 100 parties de la combinaison du premier polyol de polyéther, du deuxième polyol de polyéther, et du troisième polyol de polyéther.

3. La formulation de mousse semi-souple de n'importe laquelle des revendications précédentes, dans laquelle le premier polyol de polyéther, et le troisième polyol de polyéther ont une fonctionnalité nominale de 3 et le deuxième polyol de polyéther a une fonctionnalité nominale de 4,7.

4. Une formulation de mousse semi-souple de n'importe laquelle des revendications précédentes, la formulation de mousse semi-souple ayant un indice d'isocyanate compris dans une gamme allant de 70 à 115.

5. La formulation de mousse semi-souple de n'importe laquelle des revendications précédentes, incluant en outre un agent d'expansion qui représente de 0,5 partie à 5 parties pour 100 parties d'une combinaison du premier polyol de polyéther, du deuxième polyol de polyéther, et du troisième polyol de polyéther.

6. La formulation de mousse semi-souple de n'importe laquelle des revendications précédentes, incluant en outre un tensioactif qui représente de 0,1 partie à 1,5 partie pour 100 parties d'une combinaison du premier polyol de polyéther, du deuxième polyol de polyéther, et du troisième polyol de polyéther.

7. La formulation de mousse semi-souple de n'importe laquelle des revendications précédentes, incluant en outre un catalyseur sélectionné dans le groupe constitué de catalyseurs amine, de catalyseurs métalliques, et de combinaisons de ceux-ci, le catalyseur représentant de 0,04 partie à 5,00 parties pour 100 parties d'une combinaison du premier polyol de polyéther, du deuxième polyol de polyéther, et du troisième polyol de polyéther.

8. Une mousse semi-souple formée en faisant durcir la formulation de mousse semi-souple de n'importe laquelle des revendications 1 à 7.

9. La mousse semi-souple de la revendication 8, la mousse semi-souple ayant une déformation par charge de compression à 40 % d'au moins 1,3 kilopascal telle que mesurée selon l'ISO 3386.

10. La mousse semi-souple de n'importe laquelle des revendications 8 à 9, la mousse semi-souple ayant un temps de récupération à 95 % d'au moins 3 secondes tel que mesuré selon l'ASTM 3574/08 test M.

11. La mousse semi-souple de n'importe laquelle des revendications 8 à 10, la mousse semi-souple ayant une masse volumique allant de 35 kg/m³ à 80 kg/m³.

12. La mousse semi-souple de n'importe laquelle des revendications 8 à 11, la mousse semi-souple ayant une résilience de moins de 20 % telle que mesurée selon l'ASTM D3574.

13. Un procédé pour former une mousse semi-souple comprenant :
la combinaison d'une composition de polyol de polyéther comprenant :
un premier polyol de polyéther ayant une fonctionnalité hydroxyle nominale moyenne allant de 2 à 4 et un poids équivalent moyen en nombre allant de 120 à 1 500, le premier polyol de polyéther incluant une chaîne polymère ayant de 0 pour cent en poids à 15 pour cent en poids d'unités constitutives dérivées d'oxyde d'éthylène et 85 pour cent en poids à 100 pour cent en poids d'unités constitutives dérivées d'oxyde de propylène ;
un deuxième polyol de polyéther ayant une fonctionnalité hydroxyle nominale moyenne allant de 4 à 8 et un poids équivalent moyen en nombre allant de 120 à 800, le deuxième polyol de polyéther incluant une chaîne polymère d'oxyde de polypropylène ; et
un troisième polyol de polyéther ayant une fonctionnalité hydroxyle nominale moyenne allant de 2 à 4 et un poids équivalent moyen en nombre allant de 200 à 500, le troisième polyol de polyéther incluant une chaîne polymère ayant de 30 pour cent en poids à 85 pour cent en poids d'unités constitutives dérivées d'oxyde d'éthylène et 15 pour cent en poids à 60 pour cent en poids d'unités constitutives dérivées d'oxyde de propylène ;
dans laquelle la composition de polyol de polyéther représente de 20 pour cent en poids à 50 pour cent en poids d'unités constitutives dérivées d'oxyde d'éthylène, la composition de polyol de polyéther a une fonctionnalité hydroxyle nominale moyenne totale allant de 3,05 à 4,1, et la composition de polyol de polyéther a un poids équivalent moyen en nombre total allant de 250 à 400 ; et
du diisocyanate de toluène afin de former une formulation de mousse semi-souple ayant un indice d'isocyanate compris dans une gamme allant de 70 à 115 ; et
le durcissement de la formulation de mousse semi-souple afin de former la mousse semi-souple.

14. Le procédé de la revendication 13, comprenant en outre :
l'ajout d'eau à la formulation de mousse semi-souple, l'eau représentant de 0,5 partie à 3,5 parties pour 100 parties d'une combinaison du premier polyol de polyéther, du deuxième polyol de polyéther, et du troisième polyol de polyéther ; et
l'ajout d'un catalyseur et d'un tensioactif à la formulation de mousse semi-souple, le catalyseur représentant de 0,05 partie à 5 parties pour 100 parties de la combinaison du premier polyol de polyéther, du deuxième polyol de polyéther, et du troisième polyol de polyéther et le tensioactif représentant de 0,1 partie à 1,5 partie pour 100 parties de la combinaison du premier polyol de polyéther, du deuxième polyol de polyéther, et du troisième polyol de polyéther.
